# EUROPEAN PATENT APPLICATION

(11) **EP 1 359 557 A1**
(43) Date of publication of application: **05.11.2003**
(21) Application number: 03004296.4
(22) Date of filing: 27.02.2003
(51) Int. Cl.: G08G 1/0968, B60K 35/00

(54) **Vehicle navigation system that automatically translates roadside signs and objects**

(30) Priority: 30.04.2002 US 135486
(71) Applicant: MATSUSHITA ELECTRIC INDUSTRIAL CO., LTD., Kadoma-shi, Osaka 571-8501 (JP)
(72) Inventor: Ma, Yue, West Windsor, NJ 08550 (US); Bhattacharya, Prabir, Plainsboro, New Jersey 08536 (US); Guo, Jinhong Katherine, West Windsor, NJ 08550 (US); Chang, Chieh-Chung, Monmouth Junction, NJ 08852 (US)
(74) Representative: Schwabe - Sandmair - Marx

(57) **Abstract**

A method for interpreting objects alongside a road obtains an image of an object in the vicinity of the road, displays the image to an occupant of the vehicle and receives a signal selecting the object. The method identifies the object by extracting and recognizing text from the image. The method then translates the text into a language with which the occupant of the vehicle is familiar and presents the translated text to the occupant either as a text overlay on the displayed image or as a speech signal.

## Description

### FIELD OF THE INVENTION

The present invention generally relates to an interactive vehicle navigation system that is able to provide multi-lingual information or instructions to the driver or other occupant of the vehicle. In particular, the invention relates to a system for providing on-demand translation, in a variety of languages, of objects and signs on or near a street, road, highway, or other thoroughfare.

### BRIEF DESCRIPTION OF THE PRIOR ART

When a person rents a car and drives in a foreign country, road signs, building names such as hotels, banks and hospitals, toll booth instructions and other signs along the way often cause confusion because of culture and language differences. Palisson et al. (U.S. Patent No. 5,835,854) is one system for indicating on a display or by speech synthesis the proper names or place names in the language of the person who has rented the car. The patent to Palisson et al. discloses a receiver used in a vehicle which receives signals from signs or other objects along a roadway that are equipped with transmitters. The receiver, based on the received signal, provides a translation of or information about the sign or object in a language selected by the operator or passenger of the vehicle.

A system of the type described in the above-referenced patent may be expensive to implement on a wide scale as all of the signs which a driver or passenger may want translated must be equipped with a transmitter and all of the transmitters must be maintained. If any sign does not have a transmitter or has a malfunctioning transmitter, the sign can not be read.

### SUMMARY OF THE INVENTION

The present invention is embodied in a system which interprets signs or other objects along a street, road, highway, or other thoroughfare. In a first embodiment, the system obtains images of the various signs or objects, and displays the images for the driver or other occupant of the car. When the driver or occupant sees a sign or object and wants to know what the sign says or what the object means, he or she selects the image of the sign or object from the display and the system identifies the sign or object in the language of the driver or occupant. The identification can take the form of an on-screen display or of speech output.

In another embodiment, the image of the sign or object is sent to a remote location where it is translated or otherwise identified. The translation or other identification is transmitted back to the car as an on-screen display or speech output.

In another embodiment, the system includes a memory with a database of signs and objects and a GPS navigation database including locations of the signs and objects. The system correlates the images with the GPS navigation database to identify the signs and objects as an on-screen display or speech output.

In another embodiment, if a sign or object signifies a dangerous situation, and, upon recognizing the sign, the system automatically controls the vehicle in a manner that is consistent with the sign.

### BRIEF DESCRIPTION OF THE DRAWINGS

Figure 1 is a functional block diagram showing one embodiment of a system that includes a generic embodiment of the invention.

Figure 2 is a block diagram showing one embodiment of a part of the system shown in Figure 1.

Figure 3 is a block diagram showing one embodiment of a part of the system shown in Figure 1 that provides information about the translated text or the identified object to the driver via an on-screen display and/or speech output.

Figure 4 is a flow-chart diagram showing one embodiment of the invention that controls a vehicle in response to warning signs and provides a translation of the signs via an on-screen display or speech output.

Figure 5 is a flow-chart diagram showing an alternative embodiment of the invention for translating the text of a sign by reading the text using optical character recognition.

Figure 6 is a flow-chart diagram showing an alternative embodiment for translating the text of a sign or providing information about an object by transmitting its image to a remote location where it can be translated by a person or read by an optical character recognition system.

Figure 7 is a flow-chart diagram of another embodiment of the system using a database of signs and object along with a GPS navigation database including signs, objects, and translations.

Figure 8 is a block diagram of a system suitable for use in implementing any of the exemplary embodiments of the invention shown in Figures 1-7.

### DETAILED DESCRIPTION OF THE INVENTION

The present invention is embodied in a system for use in a motor vehicle that automatically provides information to a driver or other occupant of the vehicle regarding road signs and objects along the side of a road, highway or other thoroughfare. Business travelers and tourists could rent the disclosed system and use it when driving in a foreign country. Alternatively, the car rental companies could fit such devices in the rental cars for use by foreign tourists. This system may reduce the number of accidents in rental cars driven by foreigners thereby increasing the profits of the rental companies.

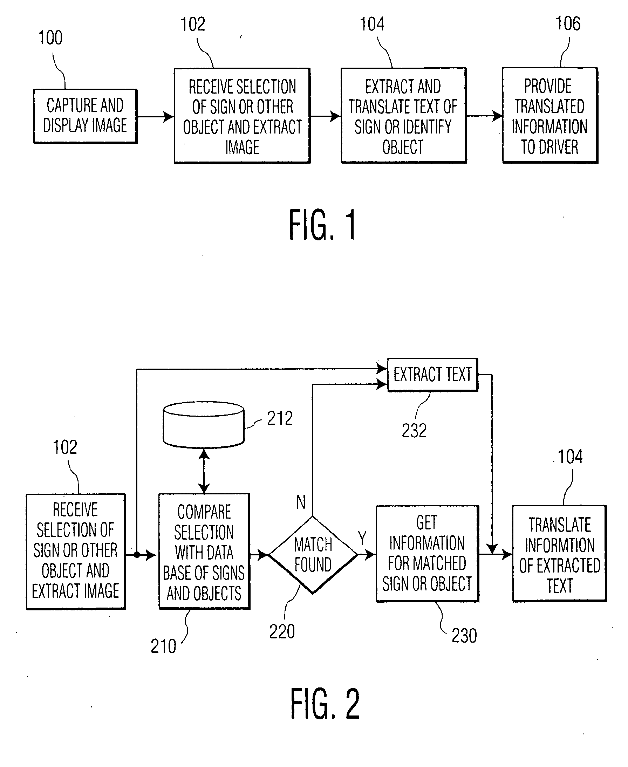

Figure 1 shows an exemplary embodiment of a generic implementation of the present invention. It consists of an apparatus 100 to capture images of the road scene including any signs and/or objects alongside the road. Apparatus 100 may be any on-vehicle device that captures a road scene similar to what the driver or other occupant sees through the windshield. The apparatus 100 may include, for example, a conventional video camera (not shown) and a frame grabber (not shown) that captures an image of the roadside and stores it into a video memory (not shown). Because the inventive apparatus reads text from the signs, it is desirable for the camera to have a fast shutter speed and wide depth of field. A camera of this type obtains sharp images of moving targets.

The apparatus 100 may also include a display processor (not shown) and a display device such as a liquid crystal device (LCD) display (not shown). In one exemplary embodiment of the invention, the LCD display includes a touch screen that allows a user to indicate an area of the displayed image by simply touching that area of the image. In this exemplary embodiment, the driver or other occupant of the vehicle sees a sign that they want to have translated and touches the screen at the location of the displayed sign. The selection of the portion of the image including the sign is received by apparatus 102.

The sign that is displayed by apparatus 100 may have, for example, text such as a speed limit or the identification of a city. As another example, the sign may have a particular color or a particular shape. As another example, the object seen by apparatus 100 may not have any writing, but may be capable of signifying important information. For the foreign traveler, the signs may follow a convention or be in a language which the traveler does not understand.

In another embodiment, apparatus 100 may include any type of driver interaction module that allows the driver or other occupant to select text, or road signs, or objects that appear in the road scene and which are of interest to the driver or occupant. For example, the interaction module may include a wearable beam pointer, for example, a laser pointer, that can be used to select a particular region on the screen. The beam pointer may be worn on the finger of the driver or occupant who can point to the area of the screen which requires translation. In this embodiment, the LCD screen may include photosensitive elements that detect the position of the light beam to select the position of the sign or object.

As another alternative, the user may use a photosensitive light pen (not shown) which senses the scanning of the display device to provide an indication of a selected position on the screen and thus, a selected part of the displayed image.

Alternatively, the interaction module can be an apparatus that receives voice commands from the user and analyzes the voice commands through a speech recognizer. These commands may, for example, identify a portion of the image, for example, upper left, upper center, lower right, etc. An example of such a speech recognizer is found in U.S. Patent No. 6,311,153 entitled SPEECH RECOGNITION METHOD AND APPARATUS USING FREQUENCY WARPING OF LINEAR PREDICTION COEFFICIENT, which is incorporated herein by reference for its teaching on voice recognition systems.

Because the driver or occupant may select a sign for translation before an effective image can be recovered, the circuitry 100 may include a facility to track a selected sign as successive video frames are captured until a readable image of the sign can be obtained.

After the driver or other occupant selects a sign or object of interest, apparatus 102 extracts any text from the image of the identified object. The text may be extracted using methods described in U.S. Patent No. 5,999,647 entitled CHARACTER EXTRACTION APPARATUS FOR EXTRACTING CHARACTER DATA FROM A TEXT IMAGE, which is incorporated herein by reference for its teaching on text extraction. Data representing the selected text is then transmitted to a device 104 which can recognize and translate the text or identify the object in a language that is understandable by the driver or other occupant. For example, device 104 may include an optical character recognition device (not shown), such as is described in U.S. Patent No. 6,212,299 entitled METHOD AND APPARATUS FOR RECOGNIZING A CHARACTER, which is incorporated herein for its teaching on optical character recognition. The device 104 may also include a language translation device (not shown) such as that described in U.S. Patent No. 5,742,505 entitled ELECTRONIC TRANSLATER WITH INSERTABLE LANGUAGE MEMORY CARDS, which is incorporated herein by reference for its teaching on automatic translation devices. Apparatus 104 may also include image processing circuitry that analyzes the target image to determine if it includes predetermined colors and shapes corresponding to a limited set of objects. For example, an inverted red triangle may be recognized as a Yield sign even without reading the word "Yield."

After device 104 performs the translation or provides information identifying the object, another device 106 provides the translation to the driver or other occupant. The translation may be. provided, for example, as a text overlay on the screen of device 202 in the driver's native language. For example, the overlay can replace the original road sign in the displayed image with text in the driver's native language or can place the translation next to the target sign or object.

Figure 2 is a block diagram of another embodiment of the invention wherein like reference numbers refer to the same devices. Figure 2 begins with the apparatus 102 that extracts any text from the image of the identified object. Although an image capturing and display device 100 is not shown in Figure,2, it is understood that apparatus 102 receives images from device 100, shown in Figure 1, which enables the driver or other occupant of the vehicle to make a selection from an image capturing device as explained in connection with Figure 1.

In the embodiment shown in Figure 2, apparatus 210 may be, for example, a device having a stored database 212 of signs and objects which are present in the country where the vehicle is being driven. Apparatus 210 is capable of comparing items in the database 212 with the image that is selected by the driver or other occupant on the screen of device 100 and coupled to device 102. The database 212 may include, for example, sample images of a number of common signs and roadside objects along with information about those signs and objects, and may include descriptions in the driver's language. Apparatus 102 may also include a video processor that warps the stored images to match the point of view of the imager 100 and then correlates the image of the sign from the imager with the images in the database. The exemplary apparatus 102 may produce, as its output signal, information about one or more signs or objects in its database that most closely match the target sign or object indicated by the driver or other occupant of the vehicle. Apparatus 102 may also provide an indication of the level of confidence of the match.

The information provided by apparatus 210 is sent to apparatus 220 which determines if there is a match between the selected sign or object and the sign or objects in the database 212. This apparatus may, for example, compare the measure of confidence provided by the apparatus 102 to a threshold value and indicate a match only if the confidence level exceeds the threshold value. If there is a match, device 230 obtains the information from the database 212 and passes it to translation and display device 104. If the information in the database 212 is already in the driver's language, then no translation is needed and device 104 simply passes the information on to the apparatus 106, described in Figure 1, to be presented to the driver.

If, however, apparatus 220 determines that no match was found in the database 212, apparatus 220 activates text extraction apparatus 232 which processes the selected portion of the image provided from apparatus 102 to extract any text or recognizable object from the image. Text extraction apparatus 232 may, for example, include the text extraction and object identification portions of apparatus 104, described above. The output signal of the apparatus 232 is applied to the translation apparatus 104, which recognizes and translates the extracted text or information about the identified object and passes the translated information to the presentation apparatus 106 (shown in Figure 1).

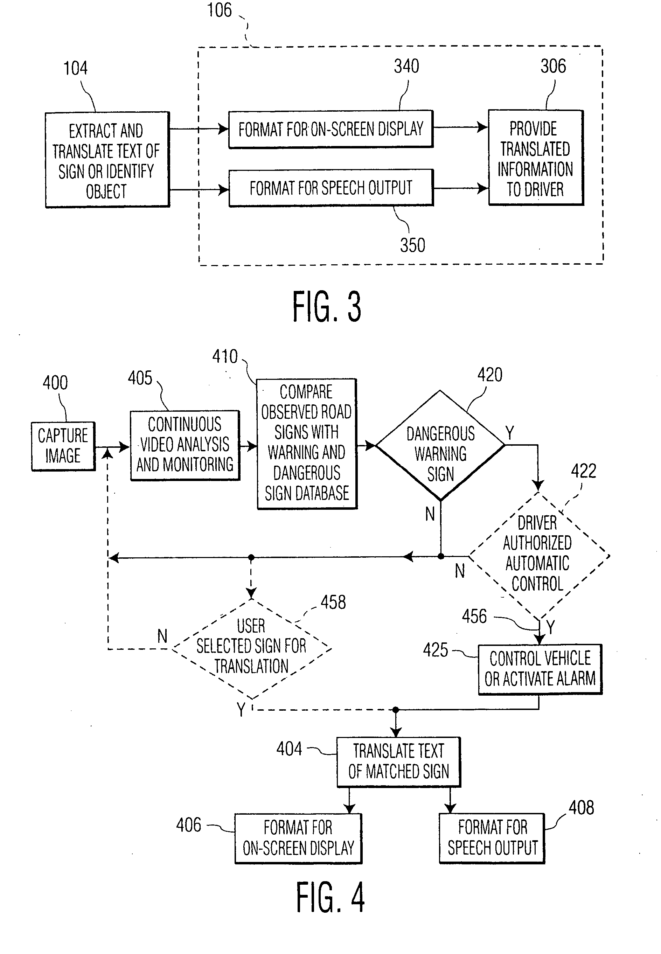

Figure 3 is a block diagram of an exemplary embodiment of the apparatus 106 that presents the translated data to the user. Figure 3 includes the apparatus 104 that extracts and translates the text of a sign or identifies an object. In the exemplary device shown in Figure 3, the output of extraction and translation device 104 is transferred both to a device 340 which formats the output for on-screen display and to a device 350 which formats it for speech output. The device 350 may, for example, include a text-to-speech conversion processor (not shown) such as that described in U.S. Patent No. 6,260,016, entitled SPEECH SYNTHESIS EMPLOYING PROSODY TEMPLATES, which is incorporated herein by reference for its teachings on text-to-speech conversion. The output data provided by devices 340 and 350 are sent to apparatus 306 which allows the driver or other occupant to either view the translated text display or to hear the converted speech, or both. Speech output data, for example, may be provided to the driver or other occupant through the vehicle's radio speaker. Text data may be provided as an overlay on the display device of the apparatus 100, described above.

Figure 4 is a flow-chart diagram which is useful for describing another embodiment of the invention. In this embodiment, images are captured at step 400 and provided to a process 405 that continuously analyzes the images to extract images of traffic signs and objects. In this exemplary embodiment, the system automatically captures and analyzes all road signs and, depending on the particular sign, may control the vehicle consistent with the sign.

Step 405 may, for example, process only key frames when the scene significantly changes. Alternatively, the step 405 may capture a predetermined number of image frames, warp the frames to a common coordinate system and combine the frames for noise reduction before analyzing the combined frame for traffic signs and roadside objects. The output data provided by step 405 is processed in step 410 to determine if any of the observed signs or objects matches items in a database of warning signs, signs indicating danger, and objects indicating danger which are present in the country where the vehicle is being driven. Step 410 may use a database and image processor as described above with reference to apparatus 210 of Figure 2.

The output data from step 410 is further processed in step 420 which determines if there is a match between the signs or objects being compared by step 410 and the warning signs or objects in the database stored in device 410. As set forth above, step 420 may compare a confidence measure produced by step 420 to a threshold value to determine if step 420 has found a match. Alternatively, step 410 may provide data on a particular sign only when it matches the image of the sign to the image in the database with a probability greater than a threshold value. As another alternative, step 410 may attempt to recognize all road-side signs and provide a Boolean signal indicating whether a particular recognized sign is or is not a warning sign. In this instance, step 420 would check the Boolean value to determine if a warning sign had been detected.

If step 420 determines that step 410 found a warning sign, step 420 provides information on the recognized sign to step 425 to automatically control the vehicle or sound an alarm consistent with the recognized sign. If, for example, the recognized sign is a speed limit sign, the system may automatically control the speed of the vehicle to be consistent with the posted speed limit. As another example, if the sign indicates that a highway ends in one mile, the system may begin to slow the vehicle while displaying a flashing warning on the display device and sounding an alarm.

As an alternative to automatically controlling the vehicle, the system may, at step 422, determine if the driver consents to automatic control before passing the information to the automatic control step 425. A driver may consent, for example, during an initial set-up of the system or for each occurrence of a warning sign that may cause an automatic control operation.

After step 425 controls the vehicle, or simultaneously with the exercise of control, step 404 can provide to the driver or other occupant the translated text of, or information from the database about the matched sign in a language familiar to the driver or occupant. The information may be formatted, at step 406, as text for display on the display device and/or may be translated into speech at step 408.

Step 404, which presents information on the sign or object to the user may also be invoked if step 420 recognized a sign but it was not a warning sign and if, at step 458, the user had selected the sign for translation. In one exemplary embodiment of the invention, the driver may select all signs for translation or may define a subset of signs for translation, for example, only traffic signs or only speed limit signs. Alternatively, the selection recognized in step 458 may be the same as is performed by the user using the apparatus 100, described above with reference to Figure 1. Step 458 may also be invoked after step 422 if the driver does not authorize automatic control of the vehicle in response to a warning sign. As indicated in the drawings, step 458 is optional. Rather than translating only user selected signs, the system may override the test of step 458 to translate and provide information to the user regarding all signs that it recognizes.

After step 420, 422 or 458, control returns to step 405 to analyze the next image provided by the image capture step 400.

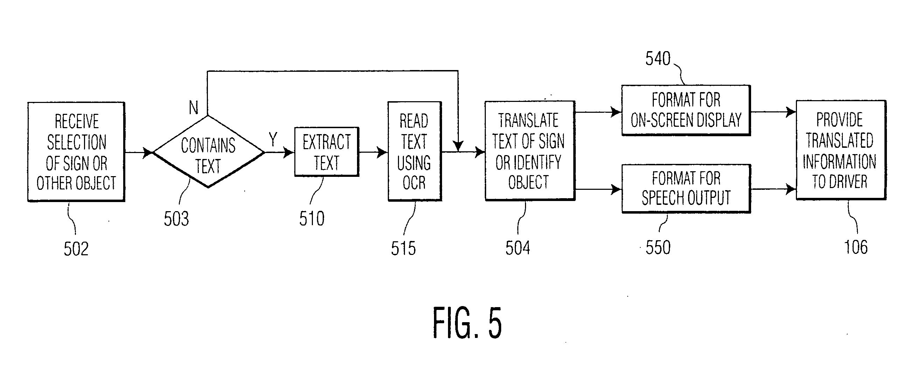

Figure 5 is a flow-chart diagram of another embodiment of the invention. Similar to the embodiment shown in Figure 2, Figure 5 begins with step 502 that receives the selection of a sign or other object. Although the image capturing device is not shown in Figure 5, it is understood that step 102 may, for example, receive images from device 100 shown in Figure 1.

After the user makes a selection at step 502, the process, at step 503 determines if the selected area of the image includes text. If it does, then at step 505, the process extracts the text and reads the text using optical character recognition techniques at step 515. After step 515 or if, at step 503, the selected area of the image did not include text, step 504 is executed which translates the text into the user's language or recognizes the object and provides the translated text or information in the user's language about the recognized object to one or both of steps 540 and 550. Step 540 formats the provided text or information for display on the display device while step 530 converts the provided text or information into speech signals. Finally, at step 560, the formatted text or information provided by step 540, step 550 or both is provided to the driver or other occupant of the vehicle. The steps 510, 515, 504, 540 and 550 operate as described above with respect to the other embodiments of the invention.

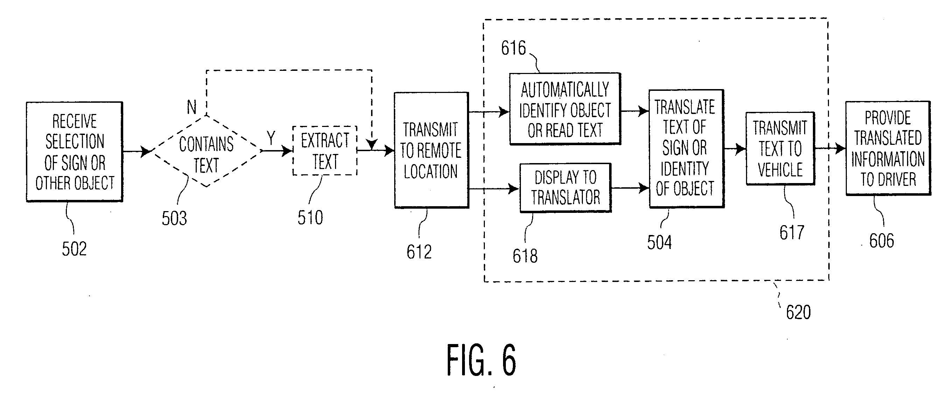

Figure 6 is a flow-chart diagram of another embodiment of the invention. In this embodiment, when step 510 extracts the text from the portion of the image indicated by step 502, the extracted text is not automatically recognized but is transmitted to a remote location for recognition. As shown in Figure 6, if at step 503, the process determines that the object does not contain text, the sub-image including the selected sign is sent to the remote location. Alternatively, as indicated by steps 503 and 510 being in phantom, the system may proceed directly from step 502 to step 612 and transmit the selected area of the image to the remote location regardless of whether it includes text. The data transmitted to the remote location at step 612 may be transmitted, for example, using video image compression techniques such as MPEG encoding and a modem (not shown). Steps 616, 618, 504 and 617 occur at the remote location as indicated by the block 620. At the remote location, the sign may be automatically identified or the extracted text may be read using an OCR process at step 616. Alternatively, the selected sub-image may be displayed to an operator, at step 618, who recognizes the sign or object in the sub-image and provides the text on the sign or an identification of the object to the translation step 504. If the operator provides a translation at step 618, step 504 may be omitted. After step 504, the translated data is sent back to the vehicle at step 617, for example, via the same communication channel used to transmit data from the car to the remote location, for presentation to the user, at step 606. This presentation may be either text on the display device or as a voice signal, as described above.

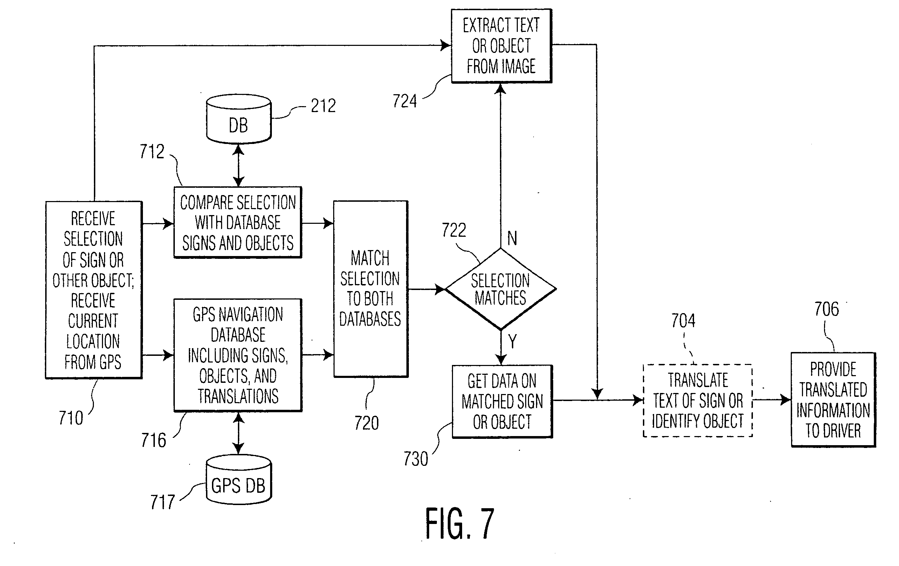

Figure 7 is a flow-chart diagram of yet another embodiment of the invention. Step 710 of this embodiment provides both global positioning satellite (GPS) data indicating the current position of the vehicle and an indication of the selected sign or object. The selected sub-image is provided to step 712 which compares the sub image to items stored in a database 212, as described above with reference to Figure 2, to provide information on a predetermined number of best matching sign from the database. At the same time, the GPS data of step 710 is provided to step 716 which searches a database of signs 717 based on their location and identifies all signs that may be visible to the user at the current position of the vehicle. Step 720 compares the signs and objects returned by step 716 with the signs and objects returned by step 712 to determine if any of the signs matches. If, at step 722, a match is found, then, at step 730, the process obtains data on the matched sign from one or both of the databases. If no match is found at step 722, step 724 is executed which extracts and recognizes any text in the sub-image provided by step 710. Step 724 may use a text extraction and OCR process, as described above with reference to Figure 1. Either the data provided by step 730 or the recognized text provided by step 724 is provided to step 704 which translates the recognized text and provides the result for presentation to the user at step 706. When the information on the sign is provided by one or both of the databases 212 and 717, it may already include a translation. Thus, step 704 may not be needed. This is indicated in the drawings by step 704 being shown in phantom.

An exemplary system that obtains GPS data and displays the data to the occupant of a vehicle is described in U.S. Patent No. 6,321,160 entitled NAVIGATION APPARATUS, which is incorporated herein by reference for its teaching on GPS navigation systems.

It is contemplated that the translation step 704 may be applied only to the text provided by step 724. In one embodiment of the invention, data on the recognized object or sign from either of the databases accessed by steps 712 and 716 may already be in the user's language and, so, no translation would be needed.

The embodiment in Figure 7 can recognize objects at step 704 and can process objects and/or text on objects in the same way as explained above with respect to signs. It is noted that all of the embodiments can be used to identify objects and text written on objects as well as signs.

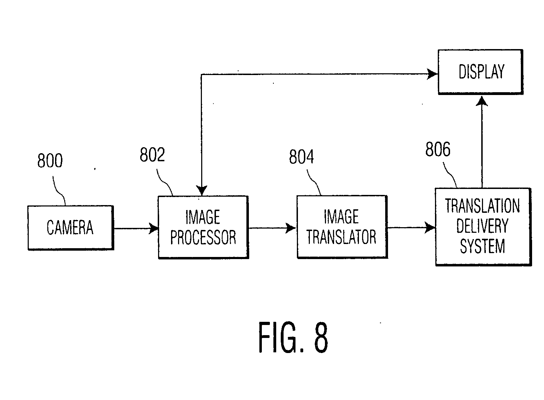

Figure 8 is a block diagram of an exemplary hardware configuration that may be used to implement any of the exemplary embodiments described above. As shown in Figure 8, a camera 800, which may be a conventional charge-coupled device (CCD) or CMOS photodiode device, is controlled by an image processor 802 which also captures and analyzes the image data. The image processor 802 may include, for example, a frame grabber (not shown), a video signal processor (not shown), a microprocessor (not shown), a video memory (not shown) and one or more database memories (not shown).

Images from the camera are captured by the frame grabber and stored into the video memory for processing by the video signal processor all under control of the microprocessor. The exemplary video signal processor may include software to warp and align images, extract text from the images and to correlate the images with reference images provided, for example, from one or more databases. The extracted text and/or the results.of the correlation operation are passed to a translation processor 804 which may include, for example, a further microprocessor (not shown) and a memory (not shown). The translation processor includes software to perform optical character recognition on the extracted text and to then translate the extracted text into the user's language. Finally, the hardware shown in Figure 8 includes a translation delivery system 806 which may, for example, include a display processor, a frame memory and software that formats the information provided by the translation processor 804 into text for display on a video screen 810 as an overlay. The video screen 810 may also be coupled to the camera 800 and to the image processor 802 to display the image, as it is produced by the camera and to provide an indication of a selected region of the image to the image processor 802, as described above with reference to Figure 1.

It is understood that the present invention is susceptible to many different variations and combinations and is not limited to the specific embodiments shown in this application. In addition, it should be understood that each of the elements disclosed all do not need to be provided in a single embodiment, but rather can be provided in any desired combination of elements where desired. Accordingly, it is understood that the above description of the present invention is susceptible to considerable modifications, changes, and adaptations by those skilled in the art that such modifications, changes and adaptations are intended to be considered within the scope of the present invention, which is set forth by the appended claims.

## Claims

1. Apparatus for interpreting objects alongside a thoroughfare for an occupant of a vehicle, the apparatus comprising:
means for obtaining an image of at least one object in the vicinity of the thoroughfare;
means for displaying the image;
means for receiving a selection of the at least one object in the image;
means for identifying the selected object in the image;
means, responsive to the means for identifying, for providing to a user of the apparatus, information about the selected object in a predetermined language.

2. Apparatus according to claim 1, wherein:
the selected object is a sign including text and the means for identifying the selected object in the image includes means for extracting the text from the image of the sign and means for recognizing the text; and
the means for providing information about the selected object includes means for translating the recognized text into the predetermined language.

3. Apparatus according to claim 1, wherein the means for identifying the selected object includes means for identifying the object by at least one of its shape and color.

4. Apparatus according to claim 1, further comprising a data base of objects and signs coupled to the means for identifying the selected object, the means for identifying further including means for comparing the selection of the at least one object from the image to the objects and signs in the database to identify the at least one object.

5. Apparatus according to claim 1, further comprising means for providing the identification in the predetermined language to the occupant of the vehicle.

6. Apparatus according to claim 2, further comprising means to format the information about the selected object in the predetermined language as at least one of an on-screen display and speech output.

7. Apparatus for identifying objects alongside a thoroughfare for an occupant of a vehicle, the apparatus comprising:
means for obtaining a plurality of successive images of objects in the vicinity of the thoroughfare;
means for continuously analyzing the plurality of successive images as the vehicle moves along the thoroughfare to identify and extract images of signs;
a database of signs;
means for comparing the extracted images of signs with the database of signs to determine if the images of signs match any of the signs in the database of signs;
means for providing an output signal when a matching sign is identified.

8. Apparatus according to claim 7, wherein the database of signs includes images of the signs and the means for comparing correlates the images of the signs to the extracted images of signs to determine if any of the extracted images of signs matches any sign in the database.

9. Apparatus according to claim 7, further comprising means for retrieving identification information for the matched sign from the database and means for translating the identification information from text in a first language to text in a second language.

10. Apparatus according to claim 9, further comprising means for formatting the text in the second language as at least one of an on-screen display and a speech output signal.

11. Apparatus according to claim 7, further including means for controlling the vehicle wherein the output signal includes data which is supplied to the means for controlling the vehicle, causing the vehicle to be controlled in a manner consistent with the matched sign.

12. Apparatus according to claim 11, further including means, responsive to the output signal for notifying the occupant of the vehicle of the matched sign.

13. Apparatus according to claim 12 wherein the means for controlling the vehicle further includes means, responsive to the means for notifying the occupant, for receiving user input consenting to the control of the vehicle.

14. Apparatus for interpreting objects alongside a thoroughfare for an occupant of a vehicle, the apparatus comprising:
means for obtaining an image of at least one object alongside the thoroughfare;
means for displaying the image;
means for receiving a selection of the at least one object in the image and for providing a sub-image of the image, the sub-image including an image of the at least one object;
means for extracting text from the image of the at least one object;
means for recognizing the extracted text; and
means for providing one of a translation of the recognized text and text identifying the at least one object as an output signal.

15. Apparatus according to claim 14, further comprising means to format the output signal for on-screen display.

16. Apparatus according to claim 14, further comprising text to speech conversion means for formatting the output signal for speech output.

17. Apparatus for interpreting objects alongside a thoroughfare for an occupant of a vehicle, the apparatus comprising:
means for obtaining an image of at least one object in the vicinity of the thoroughfare;
means for displaying the image;
means for receiving a selection of the at least one object in the image and for providing a sub-image of the image, the sub-image including an image of the at least one object;
means for extracting text from the image of the at least one object;
means for transmitting data including at least the extracted text to a remote location;
means for receiving one of translated text and information concerning the transmitted data from the remote location; and
means for providing the translated text to the occupant of the vehicle.

18. Apparatus according to claim 17, wherein the means for transmitting the extracted text to a remote location further includes means for transmitting the sub-image to the remote location.

19. Apparatus for interpreting objects alongside a thoroughfare for an occupant of a vehicle, the apparatus comprising:
means for obtaining an image of at least one object in the vicinity of the thoroughfare;
means for displaying the image;
means for receiving a selection of the at least one object in the image and for providing a sub-image of the image, the sub-image including an image of the at least one object;
means for transmitting at least the sub-image to a remote location;
means for receiving information concerning the sub-image from the remote location in a language understood by the occupant of the vehicle; and
means for providing the information to the occupant of the vehicle.

20. Apparatus for interpreting objects alongside a thoroughfare for an occupant of a vehicle, the apparatus comprising:
means for obtaining an image of at least one object in the vicinity of the thoroughfare;
means for displaying the image;
means for receiving a selection of the at least one object in the image and for providing a sub-image of the image, the sub-image including an image of the at least one object;
a sign database of signs and objects including translations of the signs and objects;
a GPS navigation database of signs and objects including respective locations of the signs and objects, and translations of the signs and objects;
means for matching the selected one of the objects to the signs and objects in the sign database and to the signs and objects in the GPS navigation database and for providing at least one matched sign or object from each of the sign database and the GPS database;
means for comparing the at least one matched sign or object from the sign database to the at least one matched sign from the GPS database and for providing, as an output signal, an identification of any of the matched signs provided by both the sign database and the GPS database; and
means for providing the identification to the occupant of the vehicle.

21. A method for interpreting objects alongside a thoroughfare for vehicles, the method comprising the steps of:
obtaining an image of at least one object in the vicinity of the thoroughfare;
displaying the image;
receiving a selection of the at least one object in the image;
identifying the selected object in the image and providing information about the selected object;
providing the information about the selected object in a predetermined language.

22. A method according to claim 21, wherein:
the selected object is a sign including text and the step of identifying the selected object in the image includes the steps of extracting the text from the image of the sign and recognizing the extracted text; and
the step of providing information about the selected object includes the step of translating the recognized text into the predetermined language.

23. A method according to claim 21, wherein the step of identifying the selected object includes the step of comparing the selected object in at least one of shape and color to a plurality of predetermined shapes and colors.

24. A method according to claim 21, further comprising the step of formatting the information in the predetermined language as at least one of an on-screen display and speech output.

25. A method for interpreting objects alongside a thoroughfare for vehicles, the method comprising the steps of:
obtaining a plurality of successive images of objects in the vicinity of the thoroughfare;
continuously analyzing the plurality of successive images as the vehicle moves along the thoroughfare to identify and extract images of signs;
comparing the images of signs with images in a database of signs to determine if the images of signs match any of the signs in the database of signs;
providing an output signal when a matching sign is identified.

26. A method according to claim 25, further comprising the steps of retrieving identification information for the matched sign from the database and translating identification information for the matched sign from text in a first language to text in a second language.

27. A method according to claim 25, further comprising the step of formatting the text in the second language as at least one of an on-screen display and a speech output signal.

28. A method according to claim 25, further comprising the step of controlling the vehicle in a manner consistent with the matched sign.

29. A method according to claim 28, further comprising the step of notifying the user of the matched sign.

30. A method according to claim 29, wherein the step of controlling the vehicle further includes the step of receiving, from the occupant, an input signal consenting to the control of the vehicle.

31. A method for interpreting objects alongside a thoroughfare for vehicles for an occupant of a vehicle, the method comprising the steps of:
obtaining an image of at least one object alongside the thoroughfare;
displaying the image;
receiving a selection of the at least one object in the image and providing a sub-image of the image, the sub-image including an image of the at least one object;
extracting text from the image of the at least one object;
recognizing the extracted text; and
providing one of a translation of the text and text identifying the at least one object as an output signal.

32. A method according to claim 31, further comprising the step of formatting the output signal for on-screen display.

33. A method according to claim 31, further comprising the step of converting the output signal to a speech output signal.

34. A method for interpreting objects alongside a thoroughfare for vehicles for an occupant of a vehicle, the method comprising the steps of:
obtaining an image of at least one object in the vicinity of the thoroughfare;
displaying the image;
receiving a selection of one of the at least one object in the image and providing a sub-image of the image, the sub-image including an image of the at least one object;
extracting text from the image of the at least one object;
transmitting data including at least the extracted text to a remote location;
receiving one of translated text and information concerning the transmitted data from the remote location; and
providing the translated text to the occupant of the vehicle.

35. A method according to claim 34, wherein the step of transmitting the extracted text to a remote location further includes the step of transmitting the sub-image to the remote location.

36. A method for interpreting objects alongside a thoroughfare for vehicles for an occupant of a vehicle, the method comprising the steps of:
obtaining an image of at least one of the objects in the vicinity of the thoroughfare;
displaying the image;
receiving a selection of one of the objects in the image and providing a sub-image of the image, the sub-image including an image of the at least one object;
matching the selected one of the objects to the signs and objects in a sign database and to signs and objects in a GPS navigation database and providing at least one matched sign or object from each of the sign database and the GPS database;
comparing the at least one matched sign or object from the sign database to the at least one matched sign from the GPS database and for providing, as an output signal, an identification of any of the matched signs provided by both the sign database and the GPS database; and
providing the identification to the occupant of the vehicle.

37. Apparatus for interpreting objects alongside a thoroughfare for vehicles for an occupant of a vehicle, the apparatus comprising:
a camera for obtaining an image of at least one object in the vicinity of the thoroughfare;
an image processor for displaying the at least one object of the image, receiving a selection of the at least one object and for identifying the at least one object in a first language;
a translator for providing the identification of the at least one object in a second language, different from the first language;
a translation delivery system for providing the identification in the second language to the occupant of the vehicle.

38. Apparatus according to claim 37, wherein the camera is operable to obtain an image of text on the at least one object in the first language, the image processor is operable to extract the text from the image of the at least one object, and recognize the extracted text.
